(19) Europäisches Patentamt
European Patent Office
Office européen des brevets

(11) **EP 0 935 144 B1**

(12) **EUROPÄISCHE PATENTSCHRIFT**

(45) Veröffentlichungstag und Bekanntmachung des Hinweises auf die Patenterteilung:
**16.11.2005 Patentblatt 2005/46**

(51) Int Cl.⁷: **G01S 13/10**, G01S 7/28, G01S 17/10

(21) Anmeldenummer: **99100847.5**

(22) Anmeldetag: **19.01.1999**

(54) **Auswertekonzept für Abstandsmessverfahren**

Evaluation concept for a range measurement method

Projet d'évaluation pour une méthode de télémètrie

(84) Benannte Vertragsstaaten:
**DE ES FR GB IT**

(30) Priorität: **07.02.1998 DE 19804958**

(43) Veröffentlichungstag der Anmeldung:
**11.08.1999 Patentblatt 1999/32**

(73) Patentinhaber: **Valeo Schalter und Sensoren GmbH**
**74321 Bietigheim-Bissingen (DE)**

(72) Erfinder:
• **Benz, Jürgen**
**74354 Besigheim (DE)**
• **Philipps, Werner Dr.**
**71638 Ludwigsburg (DE)**
• **Grabmaier, Anton Dr.**
**74321 Bietigheim-Bissingen (DE)**

(74) Vertreter: **Dreiss, Fuhlendorf, Steimle & Becker Patentanwälte**
**Gerokstrasse 1**
**70188 Stuttgart (DE)**

(56) Entgegenhaltungen:
DE-A- 3 620 226          DE-C- 4 133 196

EP 0 935 144 B1

**Beschreibung**

Die Erfindung betrifft ein Verfahren bzw. eine Vorrichtung zur Ermittlung des Abstandes zwischen einem Abstandssensor und einem Objekt.

Beim Laufzeitmessverfahren wird zu einer vorgegebenen Startzeit ein Lichtpuls ausgesendet und gleichzeitig ein Zähler angestoßen. Der Lichtpuls wird an einem Objekt, dessen Abstand bestimmt werden soll, reflektiert und der reflektierte Lichtpuls wird von einem Empfänger erfasst und durch eine analoge Nachweiselektronik nachgewiesen. Im Moment des Nachweises wird der Zähler angehalten und aus der abgelaufenen Zeitdauer sowie der bekannten Geschwindigkeit des Lichtes (c = 300.000 km/s) die Entfernung des Objektes bestimmt. Aufgrund der hohen Geschwindigkeit des Lichts ist eine schnelle Nachweiselektronik erforderlich.

Verfahren zur Entfernungsmessung nach dem Laufzeitprinzip sind auch z.B. aus der DE-A-36 20 226 bekannt. Bei diesem Verfahren kann es aber vorkommen, dass das Signal-zu-Rausch Verhältnis für die weitere Signalverarbeitung unzureichend ist. Zwar stehen einem Fachmann zahlreiche Verfahren zur Verfügung, das Signal-zu-Rausch Verhältnis zu verbessern, jedoch bedeuten diese immer einen relativ hohen zusätzlichen Aufwand.

Eine Aufgabe der vorliegenden Erfindung besteht darin, ein Abstandsermittlungsverfahren anzugeben, das bei geringem Hardeware-Aufwand eine hohe Messgenauigkeit und ein ausreichendes Signal-zu-Rausch Verhältnis liefert.

Ferner besteht eine Aufgabe der vorliegenden Erfindung darin, eine Vorrichtung zur Abstandsermittlung zu schaffen, die eine hohe Messgenauigkeit aufweist und kostengünstig herstellbar ist.

Diese Aufgaben werden mit einem Verfahren bzw. einer Vorrichtung gelöst, die die Merkmale der Ansprüche 1 und 11 aufweisen.

Durch die unmittelbare Abtastung des Empfangssignals mittels eines A/D-Umsetzers ist eine kostengünstige Anordnung realisierbar, da eine Nachweiselektronik zur Überwachung des analogen Empfangssignals nicht benötigt wird. Stattdessen wird das Empfangssignal direkt, d.h. vor seiner Auswertung, digitalisiert, wodurch erreicht wird, dass die gesamte weitere Signalverarbeitung und -auswertung auf rechnerischem Wege erfolgen kann.

Die Digitalisierung des Empfangssignals hat allerdings zur Folge, dass die zeitliche Auflösung des digitalisierten Signals durch die Abtastfrequenz f2 des A/D-Umsetzers begrenzt wird. Beispielsweise entspricht bei einer Abtastfrequenz von f2 = 40 MHz und v = c ein einzelnes Abtastintervall einer Strecke von 3,75 m. Gemäss dem Verfahren nach der Erfindung wird die Abstandsauflösung nun dadurch erhöht, dass nicht nur eine sondern mehrere - nämlich k - Wellenpuls-Laufzeitwerte T1, T2,...,Tk bestimmt werden und aus diesen k Laufzeitwerten das arithmetische Mittel T berechnet wird. Diese Mittelung erhöht die Abstandsauflösung, weil die Abtastzeitpunkte durch den A/D-Umsetzer zeitlich unabhängig von den Zeitpunkten der Aussendung der einzelnen Wellenpulse sind. Die asynchrone Abtastung bewirkt, dass bei tatsächlich identischen Pulslaufzeiten verschiedener Wellenpulse (d.h. bei einem konstanten Abstand) dennoch eine stochastische Verteilung der gemessenen Laufzeiten T1, T2,...,Tk zu verzeichnen ist. Durch die erfindungsgemäße Mittelung über die k gemessenen, stochastisch um die tatsächliche Laufzeit verteilten Laufzeiten T1, T2,...,Tk wird die Auflösung der Messung dann um den Faktor 2ROOT k erhöht. Aufgrund dieser durch eine Software-Lösung geschaffenen Erhöhung der Messauflösung wird andererseits eine in bezug auf die Hardware-Erfordernisse kostengünstigere Realisierung des erfindungsgemäßen Verfahrens ermöglicht. Die Ursache hierfür ist darin zu sehen, dass aufgrund der erfindungsgemäß durch Rechnung erzielten Auflösungserhöhung zur Erreichung einer vorgegebenen, in der Praxis geforderten Messauflösung des Gesamtsystems nunmehr ein entsprechend langsamerer und damit kostengünstigerer A/D-Umsetzer eingesetzt werden kann.

Während grundsätzlich zur Bestimmung jeder einzelnen Wellenpuls-Laufzeit Ti, i = 1,...,k jeweils lediglich das bezüglich eines empfangenen Wellenpulses erhaltene digitale Signal Z(t) ausgewertet werden muss, erfolgt nach einer bevorzugten Ausführungsform der Erfindung die Bestimmung der einzelnen Wellenpuls-Laufzeiten Ti, i = 1,...,k gemäß einem auf der Basis von n abgegebenen Wellenpulsen erhaltenen, mittleren digitalen Signal <Z (t)>. Die Signalmittelung über n Signalsequenzen, die nichts mit der vorstehend beschriebenen Zeitmittelung über k berechnete Pulslaufzeiten zu tun hat, bewirkt, dass das mittlere digitale Signal <Z (t)> ein wesentlich verbessertes Signal-zu-Rausch Verhältnis aufweist, da Rauschanteile bei der Mittelung verloren gehen, während sich Signalanteile addieren. Durch Erhöhung von n kann daher insbesondere der Messbereich des erfindungsgemäßen Abstandsmessverfahrens vergrößert werden.

Allerdings muss dabei berücksichtigt werden, dass die Messzeit proportional zu n ansteigt. Daher ist es vorteilhaft, n stets nur so groß zu wählen, dass das Signal-zu-Rausch Verhältnis des mittleren digitalen Signals <Z (t)> für die weitere Signalverarbeitung gerade noch ausreichend ist.

Neben der Mittelwertbildung wird außerdem geprüft, ob das mittlere digitale Signal <Z (t)> ein für die weitere Signalverarbeitung ausreichendes Signal-zu-Rausch Verhältnis aufweist. Ist dies nicht der Fall, geht der Prozess zum Anfang zurück und es wird eine weitere Folge von Lichtpulsen erzeugt, mit denen die Signalmittelung fortgesetzt wird. Bei einem ausreichenden Signal-zu-Rausch Verhältnis des mittleren Signals <Z (t)> geht das Verfahren weiter.

Vorzugsweise wird n zwischen 10 und 100 gewählt. Da die Verbesserung des Signal-zu-Rausch Verhältnisses

proportional zu $\sqrt{n}$ ist, wird dadurch eine 3,16 bis 10-fache Erhöhung des Signal-zu-Rausch Verhältnisses erreicht. Eine weitere vorteilhafte Ausführungsvariante der vorliegenden Erfindung kennzeichnet sich dadurch, daß die Auswertung des digitalen Signals Z(t) - bzw. bei Vorsehen einer Signalmittelung die Auswertung des mittleren digitalen Signals <Z(t)> - zur Berechnung jeweils der einzelnen Pulslaufzeiten Ti, i = 1,...,k die folgenden Schritte umfaßt:

Berechnung einer Korrelationsfunktion F($\tau$) nach der Gleichung

$$F(\tau) = \lim_{T \to \infty} \frac{1}{2T} \int_{-T}^{+T} Z(t)\, R(t-\tau)\, dt$$

bzw.

$$F(\tau) = \lim_{T \to \infty} \frac{1}{2T} \int_{-T}^{+T} \langle Z(t)\rangle\, R(t-\tau)\, dt$$

wobei R(t) ein vorgegebenes, digitalisiertes Referenzsignal mit m-fach höherer zeitlicher Auflösung als Z(t) bzw. <Z(t)> ist und wobei m eine ganzzahlige Zahl mit m > 1 ist, und

Ermittlung der Wellenpuls-Laufzeit T1 (und bei nachfolgenden Durchläufen auch der restlichen Wellenpuls-Laufzeiten T2,...Tk) als die Zeit, zu der die Korrelationsfunktion F($\tau$) maximal ist.

Die Korrelation dient zum einen dazu, die zeitliche Auflösung des empfangenen - und gegebenenfalls über n Wellenpulse gemittelten - digitalen Signals Z(t) bzw. <Z(t)> durch Faltung mit einem Referenzsignal R(t) mit m-fach höherer zeitlicher Auflösung in entsprechender Weise zu verbessern. Deshalb kann durch Erhöhung von m ähnlich wie durch Erhöhung von k die Abstandsauflösung des erfindungsgemäßen Meßverfahrens verbessert werden. Zum anderen wird die Korrelation dazu verwendet, mittels einer Maximalwertanalyse der Funktion F($\tau$) die Wellenpuls-Laufzeiten Ti, i = 1,...,k zu bestimmen.

Vorzugsweise liegt m zwischen 2 und 10. Bei der Wahl von m ist zu berücksichtigen, daß mit steigendem m der Rechenaufwand zunimmt.

Vorzugsweise wird aus dem mittleren digitalen Signal <Z(t)> die reflektierte Gesamtintensität und/oder die maximale Intensität und/oder das Signal-zu-Rausch Verhältnis bestimmt und zumindest einer dieser Parameter zur Steuerung der Verstärkung eines das Empfangssignal verstärkenden Verstärkers verwendet. Die Steuerung kann beispielsweise so erfolgen, daß die Verstärkung erhöht wird, wenn die reflektierte Gesamtintensität oder auch die maximale Intensität unter einen vorgegebenen Wert absinkt.

Aus mehreren ermittelten Abstandswerten T können in bevorzugter Weise auch Informationen über eine Relativbewegung zwischen dem Objekt und dem Sensor gewonnen werden. Dies erfolgt in der Weise, daß die erhaltenen Abstandswerte D in einem Speicher abgelegt werden und aus mehreren Abstandswerten D durch Differentiation nach der Zeit die fortlaufend die Relativgeschwindigkeit zwischen Objekt und Abstandssensor ermittelt wird.

Die zweite Aufgabe wird durch eine Vorrichtung nach dem kennzeichnenden Merkmalen des Anspruchs 11 gelöst.

Grundsätzlich kann der Sensor von einem beliebigen Typ sein. Eine insbesondere zum Einsatz in Kraftfahrzeugen geeignete, leistungsstarke Ausführung der erfindungsgemäßen Vorrichtung kennzeichnet sich dadurch, daß der Sensor als Sender eine Infrarot-Laserdiode umfaßt.

Vorteilhafterweise ist dem A/D-Umsetzer ein Zwischenspeicher nachgeschaltet, der das digitale Signal fortlaufend speichert und von dem die Auswerteschaltung das digitale Signal durch Auslesen des Zwischenspeichers bezieht. Ein FIFO ist hierfür besonders geeignet, weil sein Einlesetakt unabhängig von seinem Ausgabetakt ist und er somit zur Kopplung asynchroner Systeme geeignet ist.

Weitere bevorzugte Ausgestaltungen der vorliegenden Erfindung sind in den Unteransprüchen angegeben.

Die Erfindung wird nachfolgend in beispielhafter Weise anhand der Zeichnung näher beschrieben. In dieser zeigt:

Fig. 1    eine schematische Darstellung eines Ausführungsbeispiels der erfindungsgemäßen Vorrichtung zur Abstandsmessung und

Fig. 2    ein schematisches Blockschaltbild zur Erläuterung eines Ausführungbeispiels des erfindungsgemäßen Verfahrens.

Eine Vorrichtung zur Abstandsmessung weist einen Mikrocontroller 1 auf, der einen Zeitgeber 2 umfaßt, welcher ein elektrisches Impulssignal 3 an eine Ansteuerschaltung 4 für eine IR-Laserdiode 5 ausgibt. Die IR-Laserdiode
5 ist leistungsstark, um einen großen Meßbereich zu ermöglichen.

Die von der IR-Laserdiode 5 ausgesendeten Lichtpulse 6 werden an einem Objekt 7 reflektiert und die reflektierten Lichtpulse 8 werden von einem Empfänger, der in Form einer schnellen Photodiode 9 realisiert ist, aufgenommen. Dabei weisen die ausgesendeten Lichtpulse 6 eine kurze Pulsdauer von etwa 20 bis 50 ns auf, um auch
noch bei kurzen Abständen im Bereich von 2 m eine genaue Entfernungsmessung zu ermöglichen.

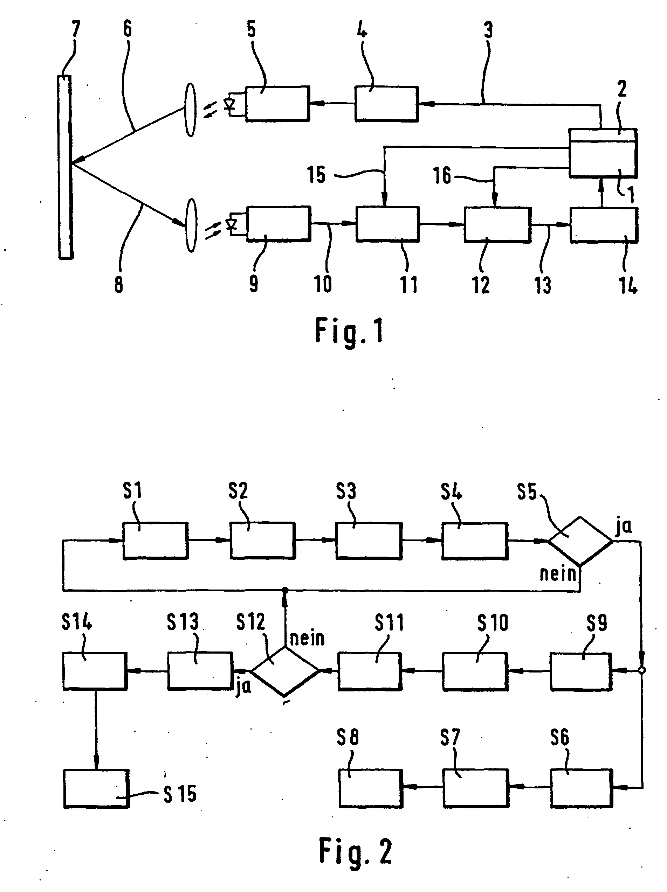

Das von der Photodiode 9 ausgegebene Empfangssignal 10 wird einem Verstärker 11 zugeführt und nach
einer Verstärkung sowie einer ggf. zusätzlich vorgesehenen Signalformung einem A/D-Umsetzer 12 bereitgestellt. Der
A/D-Umsetzer 12 tastet das Empfangssignal 10 fortlaufend mit einer Frequenz f2 ab und verarbeitet es dabei in ein
digitales Signal Z(t), das in Fig. 1 mit dem Bezugszeichen 13 bezeichnet ist.

Das digitale Signal Z(t) wird in einem FIFO (First-In-First-Out) Pufferspeicher 14 abgelegt und steht am Ausgang des FIFO Pufferspeichers 14 dem Mikrocontroller 1 zur Verfügung. Der Mikrocontroller 1 kann unabhängig von
der Abtastfrequenz f2 des A/D-Umsetzers, die den eingangsseitigen Datenzulauf bestimmt, mit seiner langsameren
Frequenz (beispielsweise der Frequenz f1) auf die in dem FIFO Pufferspeicher 14 abgelegten Daten zugreifen.

Ferner steht der Mikrocontroller 1 über eine Regelleitung 15 mit dem Verstärker 11 und über eine Mitteilungsleitung 16 mit dem A/D-Umsetzer 12 in Verbindung.

Anhand von Fig. 2 wird ein Ausführungsbeispiel des erfindungsgemäßen Verfahrens erläutert.

In Schritt S1 wird zunächst mittels des in dem Mikrocontroller 1 integrierten Impulsgebers 2 das Impulssignal
3 der Frequenz f1 erzeugt, mit dem die IR-Laserdiode 5 angesteuert wird. Die IR-Laserdiode 5 sendet daraufhin eine
vorgegebene Folge von Lichtpulsen aus. In Schritt S2 wird der Zwischenspeicher 14 mit den von dem A/D-Umsetzer
12 digitalisierten Empfangsdaten gefüllt. Die Daten laufen mit einer Frequenz f2 ein. Die im Zwischenspeicher 14
abgelegten Daten werden in Schritt S3 von dem Mikrocontroller 1 ausgelesen und entweder sofort weiterverarbeitet
oder zunächst in einem weiteren Speicherbereich des Mikrocontrollers 1 zur späteren Verarbeitung abgespeichert.

In den Schritten S4 und S5 erfolgt der Signalmittelungsschritt zur Verbesserung des Signal-zu-Rausch Verhältnisses. Dies geschieht durch eine n-malige Summation der jeweils bezüglich eines Lichtpulses erhaltenen Signaldatensequenzen $Z1(t),...,Zn(t)$ in Schritt S4 und durch eine anschließende Mittelwertbildung in Schritt S5, bei der das
mittlere digitale Signal $<Z(t)>$ berechnet wird.

Die Summation der einzelnen Signalsequenzen $Z1(t), ..., Zn(t)$ kann beispielsweise folgendermaßen erfolgen.
Jede Aussendung eines Lichtpulses wird dem A/D-Umsetzer 12 von dem Mikrocontroller 1 über die Mitteilungsleitung
16 mitgeteilt. Der A/D-Umsetzer 12 erzeugt bei jeder Mitteilung ein bestimmtes, zuvor festgelegtes binäres Signal, das
als Marke dient. Die Marken trennen somit im digitalisierten Signal Z(t) die einzelnen, jeweils einem Lichtpuls zugeordneten Signalsequenzen $Z1(t),...,Zn(t)$. Bei der Summation in Schritt S4 werden die Marken detektiert und es werden
die jeweils an gleichen Stellen hinter der Marke stehenden Binärzahlen (d.h. die Signalamplituden bezüglich gleicher
Laufzeiten) jeder Sequenz $Zi(t)$, $i=1,...,n$, addiert und der jeweilige Summenwert in Schritt S5 durch n geteilt. Dieses
Verfahren basiert darauf, daß der Zwischenspeicher 14 die Reihenfolge der zwischengespeicherten Daten unverändert
läßt.

Neben der Mittelwertbildung wird in Schritt S5 außerdem geprüft, ob das mittlere digitale Signal $<Z(t)>$ ein
für die weitere Signalverarbeitung ausreichendes Signal-zu-Rausch Verhältnis aufweist. Ist dies nicht der Fall, geht
der Prozeß zu Schritt S1 zurück und es wird eine weitere Folge von Lichtpulsen erzeugt, mit denen die Signalmittelung
in den Schritten S4 und S5 fortgesetzt wird. Bei einem ausreichenden Signal-zu-Rausch Verhältnis des mittleren Signals $<Z(t)>$ geht das Verfahren zu dem Schritt S6 und dem Schritt S9 über.

In Schritt S6 wird die maximale Amplitude, die integrale Signalintensität als Maß für die gesamte Rückstreuung
des Lichtpulses sowie das Signal-zu-Rausch Verhältnis bestimmt. Die erhaltenen Werte werden in Schritt S7 einem
ggf. im Mikrocontroller 1 integrierten PID-Regler zugeführt, der über die Regelleitung 15 in Schritt S8 die Verstärkung
des Verstärkers 11 regelt.

Die Schritte S9 und S10 betreffen die Korrelation des mittleren digitalen Signals $<Z(t)>$ mit einem diskreten
Referenzsignal R(t), das beispielsweise in Form eines Gauß-Impulses realisiert sein kann. Das diskrete Referenzsignal
R(t) weist dabei eine m-fach höhere zeitliche Auflösung als das Signal $<Z(t)>$ auf, dessen zeitliche Auflösung durch
f2 gegeben ist.

Hierfür wird in Schritt S9 die Korrelationsfunktion F(τ) nach der folgenden Beziehung numerisch berechnet:

$$F(\tau) = \lim_{T \to \infty} \frac{1}{2T} \int_{-T}^{+T} \langle Z(t) \rangle \, R(t-\tau) \, dt$$

In Schritt S10 wird die Laufzeit T1 als Zeitpunkt der maximalen Korrelation zwischen dem Referenzsignal R (t) und dem mittleren digitalen Signal <Z (t)> bestimmt. Die dabei gewonnene Entfernungsinformation T1 weist eine m-fach höhere zeitliche Auflösung gegenüber dem digitalen Signal Z(t) sowie dem mittleren digitalen Signal <Z (t)> auf.

Die erfindungsgemäße Zeitmittelung wird in den Schritten S11 und S12 durchgeführt.

In Schritt S11 erfolgt die k-malige Summation von nacheinander in Schritt S10 ermittelten Pulslaufzeiten Ti mit i = 1,...k. Hierfür wird in Schritt S11 zunächst der Wert T1 gespeichert und dann zu Schritt S12 übergegangen. In Schritt S12 wird geprüft, ob die k-malige Summation bereits abgeschlossen ist, was beim ersten Durchlauf (d.h. T1) offensichtlich noch nicht der Fall ist. Der gesamte bisher beschriebene Prozeß wird dann wiederholt und es werden auf diese Weise die Pulslaufzeiten T2, T3, usw. ermittelt und in Schritt 11 aufsummiert. Bei Summation der letzten Pulslaufzeit Tk in Schritt 11 wird dann in Schritt S12 die Rekursion abgebrochen und durch Division der summierten Pulslaufzeiten (T1+T2+...+Tk) durch k der zeitliche Mittelwert T bestimmt. Aus dem Wert T wird dann der Entfernungswert D bestimmt.

In Schritt S13 werden in der beschriebenen Weise ermittelte Zeitwerte T gesammelt und in Schritt S14 wird aus diesen Werten eine Relativgeschwindigkeit zwischen Sensor und Objekt berechnet. In Schritt S15 erfolgt die Ausgabe der ermittelten Relativgeschwindigkeitswerte.

Bezugszeichen

| | |
|---|---|
| 1 | Mikrocontroller |
| 2 | Impulsgeber |
| 3 | Impulssignal |
| 4 | Ansteuerschaltung |
| 5 | IR-Laserdiode |
| 6 | Lichtpuls |
| 7 | Objekt |
| 8 | Lichtpulse |
| 9 | Photodiode |
| 10 | Empfangssignal |
| 11 | Verstärker |
| 12 | A/D-Umsetzer |
| 13 | Digitalsignal |
| 14 | FIFO |
| 15 | Regelleitung |
| 16 | Mitteilungsleitung |

**Patentansprüche**

1. Verfahren zur Ermittlung des Abstandes zwischen einem Abstandssensor und einem Objekt (7), wobei einem Sender (5) des Abstandssensors ein elektrisches Impulssignal (3) mit vorgegebener erster Frequenz f1 zugeführt wird, der Sender (5) bei Auftreten jedes elektrischen Impulses einen Wellenpuls (6) aussendet, die Wellenpulse (6) von dem Objekt (7) reflektiert werden, ein Empfänger (9) des Abstandssensors die reflektierten Wellenpulse (8) empfängt und ein analoges elektrisches Empfangssignal (10) ausgibt, wobei das analoge elektrische Empfangssignal (10) von einem A/D-Umsetzer (12) fortlaufend mit einer zweiten Frequenz f2 mit f2>f1 abgetastet und in ein digitales Signal Z(t) (13) umgesetzt wird, und dass das digitale Signal Z(t) (13) zur Ermittlung eines Abstandswertes D folgendermaßen ausgewertet wird:

a) Auswertung des bezüglich eines oder mehreren abgegebenen Wellenpulsen (6) erhaltenen digitalen Signals Z(t) (13) bezüglich mehrerer, nämlich n Wellenpulse zur Ermittlung einer ersten Wellenpuls-Laufzeit T1, wobei n eine ganzzahlige Zahl mit n > 1 ist, indem

i. das digitalen Signal Z(t) (13) in n zeitlich aufeinanderfolgende Signalsequenzen Z1 (t), ... , Zn (t) zerlegt wird,

ii. durch Mittelwertbildung über die n Signalsequenzen ein mittleres digitales Signal <Z (t)> berechnet wird und

iii. das mittlere digitale Signal <Z (t)> zur Ermittlung der ersten Wellenpuls-Laufzeit T1 herangezogen wird

b) k-maliges Wiederholen des Schrittes a) zur Ermittlung von insgesamt k Wellenpuls-Laufzeiten T1, T2,..., Tk, wobei k eine ganzzahlige Zahl mit k > 1 ist,

c) Berechnung einer mittleren Wellenpuls-Laufzeit T=(T1+T2+...+Tk)/k und

d) Berechnung des Abstandswertes D nach D=v*T/2 , wobei v die Ausbreitungsgeschwindigkeit der Wellenpulse ist,

e) Bestimmung des Signal-zu-Rausch Verhältnisses aus dem mittleren digitalen Signal <Z (t)> im Arbeitsschritt aii), und Erzeugung einer weiteren Folge von elektrischen Impulssignalen (3), wenn das Signal-zu-Rausch Verhältnis für die weitere Signalverarbeitung nicht ausreichend ist.

2. Verfahren nach Anspruch 1, **dadurch gekennzeichnet, daß** n zwischen 10 und 100 liegt.

3. Verfahren nach Anspruch 1 oder 2, **dadurch gekennzeichnet, daß** die Auswertung des digitalen Signals Z(t) in Schritt a) bzw. des mittleren digitalen Signals <Z(t)> in Schritt 2a) die folgenden Schritte umfaßt:

Berechnung einer Korrelationsfunktion F($\tau$) der nach der Gleichung

$$F(\tau) = \lim_{T \to \infty} \frac{1}{2T} \int_{-T}^{+T} Z(t)\, R(t-\tau)\, dt$$

bzw.

$$F(\tau) = \lim_{T \to \infty} \frac{1}{2T} \int_{-T}^{+T} \langle Z(t) \rangle\, R(t-\tau)\, dt$$

wobei R(t) eine vorgegebenes, diskretisiertes Referenzsignal mit m-fach höherer zeitlicher Auflösung als Z(t) bzw. <Z (t)> ist und m eine ganzzahlige Zahl mit m > 1 ist und Ermittlung der Wellenpuls-Laufzeit T1 als die Zeit, zu der die Korrelationsfunktion F($\tau$) maximal ist.

4. Verfahren nach Anspruch 3, **dadurch gekennzeichnet, daß** das diskretisierte Referenzsignal R(t) eine Gaußfunktion ist.

5. Verfahren nach Anspruch 3 oder 4, **dadurch gekennzeichnet, daß** m zwischen 2 und 10 liegt.

6. Verfahren nach einem der vorhergehenden Ansprüche, **dadurch gekennzeichnet, daß** es sich bei den Wellenpulsen um Lichtpulse handelt und die Pulszeitdauer zwischen 20 und 50 ns beträgt.

**7.** Verfahren nach einem der vorhergehenden Ansprüche, **dadurch gekennzeichnet, daß** f1 zwischen 1kHz und 10kHz liegt.

**8.** Verfahren nach einem der vorhergehenden Ansprüche, **dadurch gekennzeichnet, daß** f2 etwa 40 MHz beträgt.

**9.** Verfahren nach einem der vorhergehenden Ansprüche, **dadurch gekennzeichnet, dass** aus dem mittleren digitalen Signal <Z(t)> die reflektierte Gesamtintensität und/oder die maximale Intensität bestimmt wird, und dass zumindest einer dieser Parameter und/oder das Signal-zu-Rausch Verhältnis zur Steuerung der Verstärkung eines das Empfangssignal (10) verstärkenden Verstärkers (11) vorgesehen ist.

**10.** Verfahren nach einem der vorhergehenden Ansprüche, **dadurch gekennzeichnet, dass** die erhaltenen Abstandswerte D fortlaufend in einem Speicher abgelegt werden, und dass aus mehreren Abstandswerten D durch Differentiation nach der Zeit fortlaufend die Relativgeschwindigkeit zwischen Objekt (7) und Abstandssensor ermittelt wird.

**11.** Vorrichtung zur Ermittlung eines Abstandes zwischen einem Abstandssensor und einem Objekt (7) mit einem Impulsgenerator (2) zur Erzeugung eines elektrischen Impulssignals (3) mit einer vorgegebenen ersten Frequenz f1, einem Sender (5), der das Impulssignal (3) entgegennimmt und bei Auftreten jedes elektrischen Impulses einen Wellenpuls (6) aussendet, einem Empfänger (9), der an dem Objekt (7) reflektierte Wellenpulse (8) empfängt und daraufhin ein analoges elektrisches Empfangssignal (10) ausgibt, mit einem A/D-Umsetzer (12), der das analoge elektrische Empfangssignal (10) fortlaufend mit einer Frequenz f2 mit f2>f1 abtastet und in ein digitales Signal Z (t) (13) umsetzt, **gekennzeichnet durch** eine Auswerteschaltung, in der k-mal mehrere, nämlich n Wellenpulse zur Ermittlung einer ersten Wellenpuls-Laufzeit T1, wobei n eine ganzzahlige Zahl mit n > 1 ist, in n zeitlich aufeinanderfolgende Signalsequenzen Z1(t),...,Zn(t) zerlegt und **durch** Mittelwertbildung ein mittleres digitales Signal <Z (t)> berechnet wird, das zur Ermittlung der ersten Wellenpuls-Laufzeit T1, T2,..., Tk, wobei k eine ganzzahlige Zahl mit k > 1 ist, herangezogen wird, und eine mittlere Wellenpuls-Laufzeit T=(T1+T2+...+Tk)/k und der Abstandswert D nach D=v*T/2, wobei v die Ausbreitungsgeschwindigkeit der Wellenpulse ist, berechnet und das Signal-zu-Rausch Verhältnis aus dem mittleren digitalen Signal <Z (t)> bestimmt wird, zur Erzeugung einer weiteren Folge von elektrischen Impulssignalen (3), wenn das Signal-zu-Rausch Verhältnis für die weitere Signalverarbeitung nicht ausreichend ist.

**12.** Vorrichtung nach Anspruch 11, **dadurch gekennzeichnet, dass** der Sender eine Infrarot-Laserdiode (5) ist.

**13.** Vorrichtung nach Anspruch 11 oder 12, **dadurch gekennzeichnet, dass** dem A/D-Umsetzer (12) ein Zwischenspeicher (14) nachgeschaltet ist, der das digitale Signal Z(t) (13) fortlaufend speichert und dass die Auswerteschaltung (1) das digitale Signal Z(t) (13) durch Auslesen des Zwischenspeichers (14) bezieht.

**14.** Vorrichtung nach Ansprüche 13, **dadurch gekennzeichnet, dass** der Zwischenspeicher (14) ein FIFO ist.

**15.** Vorrichtung nach einem der Ansprüche 11 bis 14, **dadurch gekennzeichnet, dass** ein Verstärker (11) mit variabler, von der Auswerteschaltung (1) gesteuerter Verstärkung zwischen den Empfänger (9) und den A/D-Umsetzer (12) geschaltet ist.

**Claims**

**1.** A process for determining the distance between a distance sensor and an object (7), wherein an electrical pulse signal (3) with a predetermined first frequency f1 is directed to one transmitter (5) of the distance sensor, the transmitter (5) transmits upon the occurrence of each electrical pulse a wave pulse (6), the wave pulses (6) are reflected off the object (7), a receiver (9) of the distance sensor receives the reflected wave pulses (8) and puts out an analog electrical incoming signal (10), wherein continuously scanning the analog electrical incoming signal (10) by an A/D-converter (12) at a second frequency f2 with f2 > f1 and converting into a digital signal Z(t) (13), and evaluating the digital signal Z(t) (13), for the purpose of determining a distance value D, by:

a) evaluating the digital signal Z(t) (13), received with respect to one or several emitted wave pulses (6), with respect to a plurality of n wave pulses, wherein n is an integral number with n > 1, by

i) breaking down the digital signal Z(t) (13) into signal sequences Z1 (t), ... , Zn(t) which are in n temporal order;
ii) forming a mean value via the n signal sequences, and calculating a mean digital signal <Z(t)>; and
iii) using the mean digital signal <Z(t)> for determining the first wave pulse propagations time (T1). for determining a first wave pulse propagation time (T1);

b) k-fold repeating step a) for determining total k wave pulse propagation times T1, T2, ... , Tk, wherein k is an integral number with k > 1;
c) calculating a mean wave pulse propagations time T = (T1+T2+ ... +Tk) /k;
d) calculating the distance value D in accordance with D=v*T/2, wherein v is the propagation speed of the wave pulses;
e) determining the signal-to noise ratio from the mean digital signal <Z (t)> in the step aII), and creating a further sequence of electrical pulse signal (3) if the signal-to-noise ratio is not sufficient for the further processing of the signals.

2. The process according to claim 1, **characterized in that** n is between 10 and 100.

3. The process according to claim 1 or 2, **characterized in that** the evaluation of the digital signal Z(t) in step a) or of the mean digital signal <Z(t)> in step 2a) comprises steps:

calculating a correlation function F(τ) of the type according to one of the equations:

$$F(\tau) = \lim_{T \to \infty} \frac{1}{2T} \int_{-T}^{+T} Z(t)\, R(t-\tau)\, dt$$

or

$$F(\tau) = \lim_{T \to \infty} \frac{1}{2T} \int_{-T}^{+T} \langle Z(t)\rangle\, R(t-\tau)\, dt$$

wherein R(t) is a predetermined, discretized reference signal with a temporal resolution which is higher by an order of m than Z(t) or <Z (t)> and wherein m is an integer number with m > 1 and the determination of the wave pulse propagation time T1 is the time at which the correlation function F(τ) is maximum.

4. The process according to claim 3, **characterized in that** the discretized reference signal R(t) is a Gauss function.

5. The process according to claim 3 or 4, **characterized in that** m is between 2 and 10.

6. The process according to one of the preceding claims, **characterized in that** the wave pulses are light pulses and the pulse propagation time is between 20 and 50 ns.

7. The process according to one of the preceding claims, **characterized in that** f1 is between 1 kHz and 10 kHz.

8. The process according to one of the preceding claims, **characterized in that** f2 is approximately 40 MHz.

9. The process according to one of the preceding claims, **characterized in that**, from the mean digital signal <Z(t)>, the reflected total intensity and/or the maximum intensity is determined and that at least one of these parameters and/or the signal-to-noise ratio is used to control the amplification of an amplifier for amplifying the incoming signal (11).

**10.** A process according to one of the preceding claims, **characterized in that** the distance values D are entered consecutively in a memory and that from several distance values D consecutively the relative speed between the object (7) and the distance sensor is determined by differentiation with respect to time.

**11.** Apparatus for determining the distance between a distance sensor and an object (7), having a timing generator (2) for creating of an electrical pulse signal (3) with a predetermined first frequency (fl), a transmitter (5) which receives the pulse signal (3) and transmits upon the occurrence of each electrical pulse a wave pulse (6), a receiver (9) which receives wave pulses (8) reflected off the object (7) and thereupon puts out an analog electrical incoming signal (10), an A/D-converter (12), which scans the analog electrical incoming signal (10) consecutively at a second frequency f2 with f2 > f1 and converts into a digital signal Z(t) (13), **characterized in** an evaluation circuit in which a k-fold a number of, respectively n wave pulses are broken down into n timely consecutive signal sequences Z1 (t), ... , Zn(t) for determination of a first wave pulse propagation time T1, wherein n is an integral number n > 1, and by forming a mean value via calculating a mean digital signal <Z(t)> which is used for determination of the first wave pulse propagation times T1, T2, ... , Tk, wherein k is an integer number with k > 1 and a mean wave pulse propagations time T = (T1+T2+ ... +Tk)/k and the distance value D in accordance with D = v*T/2, wherein v is the propagation speed of the wave pulses, and that the signal-to-noise ration is determined from the mean digital signal <Z(t)> for a further series of electrical pulse signals (3) if the signal-to-noise ration is not sufficient for the further for the further processing of the signals.

**12.** Apparatus according to claim 11, **characterized in that** the transmitter is a infrared-laser diode (5).

**13.** Apparatus according to claim 11 or 12, **characterized in that** the A/D-converter (12) is followed by a buffer memory (14) which stores the digital signal Z(t) (13) consecutively and that the microcontroller (1) receives the digital signal Z(t) (13) via reading the buffer memory (14).

**14.** Apparatus according to claim 13, **characterized in that** the buffer memory (14) is a FIFO.

**15.** Apparatus according to one of claims 11 or 14, **characterized in that** an amplifier (11) with a variable amplification controlled by the microcontroller (1) is connected between the receiver (9) and the A/D-converter (12).

**Revendications**

**1.** Procédé pour déterminer la distance entre un capteur de distance et un objet (7), dans lequel on applique à un émetteur (5) du capteur de distance un signal électrique impulsionnel (3) à une première fréquence prédéterminée f1, l'émetteur (5) émet une impulsion d'onde (6) à chaque apparition d'une impulsion électrique, les impulsions d'onde (6) sont réfléchies par l'objet (7), un récepteur (9) du capteur de distance reçoit les impulsions d'onde réfléchies (8) et délivre un signal électrique analogique de réception (10), le signal électrique analogique de réception (10) étant échantillonné en continu par un convertisseur A/N (12) à une deuxième fréquence f2, avec f2 > f1, et converti en un signal numérique Z(t) (13), et dans lequel le signal numérique Z(t) (13) est traité de la manière suivante afin de déterminer une valeur de distance D :

a) Traitement du signal numérique Z(t) (13) obtenu pour une plusieurs impulsions d'onde (6) émises en fonction de plusieurs, à savoir n impulsions d'onde afin de déterminer un premier temps de parcours de l'impulsion d'onde T1, n étant un nombre entier, avec n > 1,

i) en décomposant le signal numérique Z(t) (13) en n séquences de signal se suivant dans le temps Z1 (t), ..., Zn(t),
ii) en calculant un signal numérique moyen <Z (t)> par formation d'une moyenne sur les n séquences de signal, et
iii) en utilisant le signal numérique moyen <Z (t)> pour déterminer le premier temps de parcours de l'impulsion d'onde T1,

b) Répétition k fois de l'étape a) afin de déterminer les temps de parcours du total de k impulsions d'onde T1, T2, ..., Tk, k étant un nombre entier avec k > 1,
c) Calcul d'un temps de parcours moyen de l'impulsion d'onde T = (T1 + T2 + ... + Tk) /k, et
d) Calcul de la valeur de distance D suivant D = v*T/2, où v est la vitesse de propagation des impulsions d'onde,
e) Détermination du rapport signal/bruit à partir du signal numérique moyen <Z (t)> dans l'étape de travail aii) et génération d'une autre séquence de signaux électriques impulsionnels (3) lorsque le rapport signal/bruit n'est pas suffisant pour poursuivre le traitement du signal.

2. Procédé selon la revendication 1, **caractérisé en ce que** n a une valeur comprise entre 10 et 100.

3. Procédé selon la revendication 1 ou la revendication 2, **caractérisé en ce que** le traitement du signal numérique Z(t) à l'étape a) ou du signal numérique moyen <Z (t)> à l'étape 2a) comprend les étapes suivantes :

Calcul d'une fonction de corrélation F (τ) suivant l'équation

$$F(\tau) = \lim_{T\to\infty} \frac{1}{2T} \int_{-T}^{+T} Z(t)\, R(t-\tau)\, dt$$

ou

$$F(\tau) = \lim_{T\to\infty} \frac{1}{2T} \int_{-T}^{+T} \langle Z(t) \rangle\, R(t-\tau)\, dt$$

où R(t) est un signal de référence discrétisé prédéterminé ayant une résolution temporelle m fois supérieure à celle de Z(t) ou <Z (t)> et m est un nombre entier, avec m > 1, et détermination du temps de parcours T1 de l'impulsion d'onde comme étant le temps auquel la fonction de corrélation F(i) est maximale.

4. Procédé selon la revendication 3, **caractérisé en ce que** le signal de référence discrétisé R(t) est une fonction gaussienne.

5. Procédé selon la revendication 3 ou la revendication 4, **caractérisé en ce que** m a une valeur comprise entre 2 et 10.

6. Procédé selon l'une des revendications précédentes, **caractérisé en ce que** les impulsions d'onde sont des impulsions lumineuses et **en ce que** les impulsions ont une durée de 20 à 50 ns.

7. Procédé selon l'une des revendications précédentes, **caractérisé en ce que** f1 se situe dans la plage de 1 kHz à 10 kHz.

8. Procédé selon l'une des revendications précédentes, **caractérisé en ce que** f2 est égal à environ 40 MHz.

9. Procédé selon l'une des revendications précédentes, **caractérisé en ce que** l'on détermine à partir du signal numérique moyen <Z (t)> l'intensité totale réfléchie et/ou l'intensité maximale et **en ce que** l'un au moins de ces paramètres et/ou le rapport signal/bruit est prévu pour commander l'amplification d'un amplificateur (11) qui amplifie le signal de réception (10).

10. Procédé selon l'une des revendications précédentes, **caractérisé en ce que** les valeurs de distance D obtenues sont stockées en continu dans une mémoire et **en ce que**, par différenciation dans le temps à partir de plusieurs valeurs de distance D, on détermine en continu la vitesse relative entre l'objet (7) et le capteur de distance.

11. Dispositif pour déterminer une distance entre un capteur de distance et un objet (7), avec un générateur d'impulsion (2) pour produire un signal électrique impulsionnel (3) à une première fréquence prédéterminée f1, un émetteur (5) qui reçoit le signal impulsionnel (3) et qui délivre une impulsion d'onde (6) à chaque apparition d'une impulsion électrique, un récepteur (9) qui reçoit les impulsions d'onde (8) réfléchies par l'objet (7) et délivre ensuite un signal électrique analogique de réception (10), avec un convertisseur A/N (12) qui échantillonne en continu le signal électrique analogique de réception (10) à une fréquence f2, avec f2 > f1, et le convertit en un signal numérique Z (t) (13), **caractérisé par** un circuit de traitement dans lequel plusieurs, c'est-à-dire n impulsions d'onde sont décomposées k fois en n séquences de signal Z1 (t), ..., Zn(t) se suivant dans le temps, n étant un nombre entier, avec n > 1, afin de déterminer un premier temps de parcours d'impulsion d'onde T1 et qui, par formation de la moyenne, calcule un signal numérique moyen <Z (t)> qui est utilisé pour déterminer le premier temps de parcours d'impulsion d'onde T1, T2, ..., Tk, où k est un nombre entier, avec k > 1, et un temps de parcours d'impulsion d'onde moyen T = (T1 + T2 + ... + Tk)/k et la valeur de distance D est calculée suivant D =v *T/2, où v est la vitesse de propagation des impulsions d'onde, et le rapport signal/bruit est déterminé à partir du signal numérique moyen <Z (t)> afin de générer une autre séquence de signaux électriques impulsionnels (3) lorsque le rapport signal/bruit n'est pas suffisant pour la suite du traitement du signal.

**12.** Dispositif selon la revendication 11, **caractérisé en ce que** l'émetteur est une diode laser à infrarouge (5).

**13.** Dispositif selon la revendication 11 ou la revendication 12, **caractérisé en ce que** le convertisseur A/N (12) est relié en amont à une mémoire intermédiaire (14) qui stocke en continu le signal numérique Z(t) (13) et **en ce que** le circuit de traitement (1) extrait le signal numérique Z(t) (13) en lisant la mémoire intermédiaire (14).

**14.** Dispositif selon la revendication 13, **caractérisé en ce que** la mémoire intermédiaire (14) est une mémoire FIFO.

**15.** Dispositif selon l'une des revendications 11 à 14, **caractérisé en ce qu'**un amplificateur (11) avec une amplification variable, commandée par le circuit de traitement (1), est câblé entre le récepteur (9) et le convertisseur A/N (12).

EP 0 935 144 B1

Fig.1

Fig. 2

12